# EUROPEAN PATENT SPECIFICATION

(11) **EP 1 516 890 B1**
(45) Date of publication and mention of the grant of the patent: **12.04.2017**
(21) Application number: 03736148.2
(22) Date of filing: 11.06.2003
(51) Int. Cl.: C08L 23/28, C08J 3/07, C08F 8/44, C08F 255/00, C08F 255/02, C09D 123/26, C09D 151/06, C09J 151/06, C08L 51/06

(54) **AQUEOUS RESIN DISPERSION COMPOSITION AND PROCESS FOR PRODUCING THE SAME**
WÄSSRIGE HARZDISPERSIONSZUSAMMENSETZUNG UND HERSTELLUNGSVERFAHREN DAFÜR
COMPOSITION DE DISPERSION DE RESINE AQUEUSE ET SON PROCEDE DE PRODUCTION

(30) Priority: 14.06.2002 JP 2002174814
(43) Date of publication of application: 23.03.2005
(73) Proprietor: Toyobo Co., Ltd., Osaka-shi Osaka 530-8230 (JP); TOYOTA JIDOSHA KABUSHIKI KAISHA, Toyota-shi, Aichi-ken, 471-8571 (JP)
(72) Inventor: TSUNEKA, Tatsuo c/o Chem. R. C. of TOYO KASEI KOG., Takasago-shi, Hyogo 676-0082 (JP); MASUDA, Takafumi c/o Chem. R.C. of TOYO KASEI KOG., Takasago-shi, Hyogo 676-0082 (JP); MAEKAWA, Shoji c/o Chem. R. C. of TOYO KASEI KOG., Takasago-shi, Hyogo 676-0082 (JP); HATANO, Kazuhiro c/o TOYOTA JIDOSHA KABUSHIKI K., Toyota-shi, Aichi-ken, 471-8571 (JP)
(74) Representative: Müller-Boré & Partner Patentanwälte PartG mbB
(86) International application number: PCT/JP2003/007389
(87) International publication number: WO 2003/106555

(56) References cited:
- EP-A- 0 523 993
- EP-A1- 0 874 031
- JP-A- 7 026 088
- JP-A- 7 102 134
- JP-A- 10 330 563
- JP-A- 2001 163 984
- JP-A- 2001 226 545
- US-A- 5 801 219

## Description

### TECHNICAL FIELD

The present invention relates to an aqueous resin dispersion composition for use as a primer for substrates made of polypropylene and polyolefin resins and to a process for producing the same.

### BACKGROUND ART

Polypropylene and polyolefin resins have noteworthy properties and are inexpensive. Therefore, they are used in a wide variety of applications such as automotive parts. However, since polyolefin resins are crystalline and their surfaces are non-polar, polyolefin resins have the problem in that it is difficult to coat or bond them.

For this reason, chlorinated polyolefins are used to coat and bond polyolefin resins. However, the use of toluene, xylene and like organic solvents to dissolve such chlorinated polyolefin resins gives serious environmental and health problems.

To rectify these problems, chlorinated polyolefins are often made aqueous. However, the use of emulsifiers during production of conventional aqueous chlorinated polyolefin resin compositions poses problems in that the foaming of resin compositions occurs during concentration carried out by evaporating organic solvents and the like, thereby prolonging the production process, and emulsifiers that may remain in films formed from resin compositions impair the water resistance of the films. Moreover, nonylphenyl ether-type emulsifiers are often used, from which nonylphenol is generated in the process of biodegradation. Nonylphenol can affect the living body as an endocrine disruptor.

JP702608 discloses a modified chlorinated polypropylene resin graft copolymerized with unsaturated carboxylic acids and neutralized with amines. The polymer has a molecular weight in the range 10000 - 80000 and a chlorination degree of 20 to 30 wt%.

### DISCLOSURE OF THE INVENTION

One object of the invention is to provide an aqueous chlorinated polyolefin resin dispersion composition without the use of emulsifiers.

Other objects and characteristics of the present invention will become evident by the disclosure provided hereinbelow.

The inventors, as a result of their extensive research, found that acid-modified chlorinated polyolefins can be dispersed in water without emulsifiers by using an ethereal solvent and a basic substance, and thereby accomplished the present invention.

In particular, the present invention provides an aqueous resin dispersion composition and a process for producing it as described below:
1. An aqueous resin dispersion composition prepared by neutralizing with a basic substance an acid-modified chlorinated polyolefin that has been modified by at least one member selected from the group consisting of maleic acid, itaconic acid, citraconic acid, and acid anhydrides thereof, and dispersing the neutralized acid-modified chlorinated polyolefin in water,wherein the acid-modified chlorinated polyolefin is prepared by graft-copolymerizing at least one member selected from the group consisting of maleic acid, itaconic acid, citraconic acid, and acid anhydrides thereof with at least one member selected from the group consisting of polypropylene and propylene-a-olefin copolymers in a proportion of 0.1 to 10 wt.% based on the at least one member selected from the group consisting of polypropylene and propylene-a-olefin copolymers to obtain an acid-modified polyolefin, and chlorinating the acid-modified polyolefin, and wherein the aqueous resin dispersion does not contain any emulsifiers.
2. The composition according to Item 1, wherein the acid-modified chlorinated polyolefin has a chlorine content of 15 to 35 wt.%.
3. The composition according to any one of Items 1 to 2, wherein the acid-modified chlorinated polyolefin has a weight-average molecular weight of 10000 to 150000.
4. The composition according to any one of Items 1 to 3 , wherein the basic substance is at least one member selected from the group consisting of morpholine, ammonia and amines.
5. A process for producing an aqueous resin dispersion composition without the use of emulsifiers comprising the steps of: dissolving an acid-modified chlorinated polyolefin in an ethereal solvent; adding a basic substance to the acid-modified chlorinated polyolefin to neutralize; adding water to the neutralized acid-modified chlorinated polyolefin solution to form a W/ O dispersion, and further adding water to initiate phase conversion to give an O/W dispersion; and removing the ethereal solvent, wherein the acid-modified chlorinated polyolefin is prepared by graft-copolymerizing at least one member selected from the group consisting of (X ,P-unsaturated carboxylic acids and acid anhydrides thereof with at least one member selected from the group consisting of polypropylene and propylene-a-olefin copolymers in a proportion of 0.1 to 10 wt.% based on the at least one member selected from the group consisting of polypropylene and propylene-a-olefin copolymers to obtain an acid-modified polyolefin, and chlorinating the acid-modified polyolefin.
6. The process according to Item 5, wherein the acid-modified chlorinated polyolefin is prepared by graft-copolymerizing at least one member selected from the group consisting of α,β-unsaturated carboxylic acids and acid anhydrides thereof with at least one member selected from the group consisting of polypropylene and propylene-α-olefin copolymers in a proportion of 0.1 to 10 wt.% based on the at least one member selected from the group consisting of polypropylene and propylene-α-olefin copolymers.
7. The process according to Item 5 or 6, wherein the acid-modified chlorinated polyolefin has a chlorine content of 15 to 35 wt.%.
8. The process according to any one of Items 5 to 7,
   wherein the acid-modified chlorinated polyolefin has a weight-average molecular weight of 10000 to 150000.
9. The process according to any one of Items 5 to 8, wherein the ethereal solvent is at least one member selected from the group consisting of tetrahydrofuran, propylene glycol monomethyl ether, propylene glycol monoethyl ether and propylene glycol monopropyl ether.
10. The process according to any one of Items 5 to 9, wherein the basic substance is at least one member selected from the group consisting of morpholine, ammonia and amines.

The aqueous resin dispersion composition and the production process thereof of the present invention are described below in detail.

To produce the aqueous resin dispersion composition of the invention, an acid-modified chlorinated polyolefin is dissolved in an ethereal solvent, the acid-modified chlorinated polyolefin is neutralized by adding a basic substance, water is added to disperse the neutralized acid-modified chlorinated polyolefin therein, and the ethereal solvent is removed.

With respect to the starting material, i.e., acid-modified chlorinated polyolefin, those that can be prepared by, for example, graft-copolymerizing at least one member selected from α,β-unsaturated carboxylic acids and acid anhydrides thereof with at least one member selected from polypropylene and propylene-α-olefin copolymers, and chlorinating thus-prepared acid-modified polyolefin are used.

Propylene-α-olefin copolymers as used herein are compounds that contain propylene as a principal ingredient copolymerized with at least one other α-olefin. Examples of other α-olefins include ethylene, 1-butene, 1-heptene, 1-octene, 4-methyl-1-pentene, and they can be used singly or in combination. Among such α-olefins, ethylene and 1-butene are preferable. Although the ratio of propylene to other α-olefin(s) in the propylene-α-olefin copolymer is not limited, propylene is contained preferably in a proportion of 50 mol% or greater, and more preferably 90 mol% or greater.

Examples of α,β-unsaturated carboxylic acids and acid anhydrides thereof that are to be graft-copolymerized with at least one member selected from polypropylene and propylene-α-olefin copolymers include maleic acid, itaconic acid, citraconic acid, and the acid anhydrides thereof. Among these, acid anhydrides are preferable, with maleic anhydride and itaconic anhydride being particularly preferable. The at least one member selected from α,β-unsaturated carboxylic acids and acid anhydrides thereof is graft-copolymerized in a proportion of 0.1 to 10 wt.% and more preferably 1 to 5 wt.%.

Examples of methods for graft-copolymerizing the at least one member selected from α,β-unsaturated carboxylic acids and acid anhydrides thereof with the at least one member selected from polypropylene and propylene-α-olefin copolymers include solution methods, fusion methods and like known methods.

For example, a solution method can be carried out as follows. At least one member selected from polypropylene and propylene-α-olefin copolymers is dissolved in an aromatic organic solvent such as toluene at 100 to 180°C; at least one member selected from α,β-unsaturated carboxylic acids and acid anhydrides thereof is added thereto; and a reaction is proceeded by adding a radical generator in a single batch or in portions.

For example, a fusion method can be carried out as follows. At least one member selected from polypropylene and propylene-α-olefin copolymers is fused by heating it to its melting point or greater, and a reaction is proceeded by adding a radical generator and at least one member selected from α,β-unsaturated carboxylic acids and acid anhydrides thereof.

Examples of radical generators are benzoyl peroxide, dicumyl peroxide and di-t-butyl peroxide. Radical generators can be suitably selected according to their decomposition temperature and the reaction temperature.

The acid-modified polyolefin obtained as above is then chlorinated to give an acid-modified chlorinated polyolefin.

Such chlorination can be performed by, for example, dissolving the acid-modified polyolefin in a chlorinated solvent and injecting chlorine gas in the presence or absence of a radical generator such that the acid-modified polyolefin acquires a chlorine content of 15 to 35 wt.%. Examples of chlorinated solvents are tetrachloroethylene, tetrachloroethane, carbon tetrachloride and chloroform.

The acid-modified chlorinated polyolefin has a chlorine content of preferably 15 to 35 wt.%. Acid-modified chlorinated polyolefins having a chlorine content of less than 15 wt.% may not be able to be dispersed in water due to their poor solubility qualities. Acid-modified chlorinated polyolefins having a chlorine content of greater than 35 wt.% may exhibit inferior adhesion due to their poor cohesion. A more preferable chlorine content is 17 to 27 wt.%.

The acid-modified chlorinated polyolefin has a weight-average molecular weight of preferably 10000 to 150000. Acid-modified chlorinated polyolefins having a weight-average molecular weight of less than 10000 may exhibit inferior adhesion due to their poor cohesion. Acid-modified chlorinated polyolefins having a weight-average molecular weight of greater than 150000 may not be able to be dispersed in water due to their poor solubility qualities. A more preferable weight-average molecular weight is 30000 to 100000. The weight-average molecular weight can be measured by GPC (gel permeation chromatography).

To produce the aqueous resin dispersion composition of the invention, the acid-modified chlorinated polyolefin is dissolved in an ethereal solvent, neutralized by adding a basic substance, dispersed in water, and the ethereal solvent is then removed.

The production process is described step by step below.

Initially, the acid-modified chlorinated polyolefin is dissolved in an ethereal solvent. Examples of ethereal solvents are tetrahydrofuran, propylene glycol monomethyl ether, propylene glycol monoethyl ether, propylene glycol monopropyl ether. Such ethereal solvents can be used singly or in combination. Preferable ethereal solvents are tetrahydrofuran and propylene glycol monopropyl ether. The weight ratio of acid-modified chlorinated polyolefin/ethereal solvent is preferably 60/40 to 10/90, and more preferably 40/60 to 10/90. Although the dissolution temperature is not limited, it is preferably about 50 to about 65°C.

Next, the acid-modified chlorinated polyolefin solution obtained above is neutralized by adding a basic substance. Examples of basic substances include morpholine; ammonia; and methylamine, ethylamine, dimethylamine, triethylamine, ethanolamine and dimethylethanolamine. Such basic substances can be used singly or in combination. A preferable basic substance is dimethylethanolamine. The amount of basic substance used is preferably 1 to 2.5 chemical equivalents and more preferably 1.5 to 2.5 chemical equivalents per carboxyl group of the acid-modified chlorinated polyolefin.

Next, water is added to the neutralized acid-modified chlorinated polyolefin solution to form a W/O dispersion. Water is further added to initiate phase conversion to give an O/W dispersion. Although the temperature of water to be added is not limited, it is preferably about 50 to about 70°C. The amount of water to be added is also not limited, but it is preferably 2 to 6 times and more preferably 3 to 5 times the weight of the acid-modified chlorinated polyolefin. In the present invention, an ethereal solvent can be added in conjunction with water such that the weight ratio of acid-modified chlorinated polyolefin/ethereal solvent in the dispersion is within the range of from 40/60 to 10/90. The makeup (weight ratio) of the dispersion after phase conversion is preferably acid-modified chlorinated polyolefin/ethereal solvent/basic substance/water of 1/0.4-3.5/0.07-0.25/4-9.

Thereafter, the aqueous resin dispersion composition of the invention is obtained by removing the ethereal solvent from the phase-converted dispersion. Reduced-pressure distillation can be employed to remove the ethereal solvent. Although the degree of pressure reduction during distillation is not limited, a reduced pressure of about 90 to about 95 kPa is preferable. In this instance, water is partially evaporated. The makeup (weight ratio) of the aqueous resin dispersion composition after distilling off the ethereal solvent and part of water under reduced pressure is preferably acid-modified chlorinated polyolefin/basic substance/water of 1/0.06-0.33/1.5-4. Water can be replenished in a suitable amount as necessary.

The aqueous resin dispersion composition of the invention can be used singly or in combination with pigments or other aqueous resins.

The aqueous resin dispersion composition of the invention has excellent adhesion to polyolefin resins, and therefore is useful in applications such as primers for coating and bonding as well as coating materials and adhesives.

The aqueous resin dispersion composition of the invention has excellent adhesion to polypropylene and like polyolefin resins, outstanding gasoline resistance, and remarkable water resistance.

According to the production process of the invention, an aqueous chlorinated polyolefin resin dispersion composition can be obtained without the use of an emulsifier.

### BEST MODE FOR CARRYING OUT THE INVENTION

Examples and a Comparative Example are given below to illustrate the invention in more detail.

### Example 1

Thirty grams of an acid-modified chlorinated polyolefin (propylene content in the propylene-ethylene copolymer: 94.5 mol%, graft-copolymerized maleic anhydride content: 2.0 wt.%, chlorine content: 21.1 wt.%, weight-average molecular weight: 51000) and 70 g of tetrahydrofuran were placed in a stirrer-equipped flask and heated to 65°C to dissolve. Then, 0.94 g (2 chemical equivalents) of dimethylethanolamine was added. While maintaining the temperature at 65°C, water at 60°C was added dropwise. Addition of 100 g of water converted the dispersion from W/O to O/W. Tetrahydrofuran was distilled off for 1 hour under reduced pressure at 93 kPa, thereby giving a milky white dispersion (aqueous resin dispersion composition). This dispersion had a solids content of 30 wt.%. After being left to stand for 1 week, this dispersion did not exhibit separation.

### Example 2

Thirty grams of an acid-modified chlorinated polyolefin (propylene content in the propylene-ethylene copolymer: 97.5 mol%, graft-copolymerized maleic anhydride content: 1.2 wt.%, chlorine content: 20.1 wt.%, weight-average molecular weight: 85000), 56 g of tetrahydrofuran and 14 g of propylene glycol monopropyl ether were placed in a stirrer-equipped flask and heated to 65°C to dissolve. Then, 0.56 g (2 chemical equivalents) of dimethylethanolamine was added. While maintaining the temperature at 65°C, water at 60°C was added dropwise. Addition of 100 g of water converted the dispersion from W/O to O/W. Tetrahydrofuran and propylene glycol monopropyl ether were distilled off for 1.5 hours under reduced pressure at 92 kPa, thereby giving a milky white dispersion (aqueous resin dispersion composition). This dispersion had a solids content of 30 wt.%. After being left to stand for 1 week, this dispersion did not exhibit separation.

### Comparative Example 1

Thirty grams of an acid-modified chlorinated polyolefin (propylene content in the propylene-ethylene copolymer: 94.5 mol%, graft-copolymerized maleic anhydride content: 2.0 wt.%, chlorine content: 21.1 wt.%, weight-average molecular weight: 51000) and 70 g of tetrahydrofuran were placed in a stirrer-equipped flask and heated to 65°C to dissolve. Then, 6 g of a nonionic emulsifier was added and stirred, and 0.94 g (2 chemical equivalents) of dimethylethanolamine was further added. While maintaining the temperature at 65°C, water at 60°C was added dropwise. Addition of 100 g of water converted the dispersion from W/O to O/W. Tetrahydrofuran was distilled off for 2.5 hours under reduced pressure at 93 kPa, thereby giving a milky white dispersion (aqueous resin dispersion composition). This dispersion had a solids content of 31 wt.%. After being left to stand for 1 week, this dispersion did not exhibit separation.

The adhesion, gasoline resistance and water resistance of the aqueous resin dispersion compositions obtained in Examples 1 and 2 and Comparative Example 1 were evaluated according to the methods described below:
Adhesion: Polypropylene boards were coated with the aqueous resin dispersion compositions which had a solids content of 30 wt.% and dried at 80°C for 10 minutes. A two-component urethane coating was further applied thereonto and the boards were dried at 90°C for 20 minutes. The coated surface of each board was provided with a grid pattern of hundred 1-mm squares by a cutter. An adhesive cellophane tape was securely placed on the coated surface, and the tape was quickly peeled parallel to the surface. This procedure was repeated 10 times. If a coated board exhibited no film removal after ten rounds of tape peeling, this was given 10 points.

Gasoline resistance: Coated boards were prepared in the same manner as above and immersed in conventional unleaded gasoline maintained at 20°C for 2 hours. Good refers to the coated surface staying intact. Poor refers to peeling of the coated surface occurring.

Water resistance: Coated boards were prepared in the same manner as above and immersed in 40°C warm water for 10 days. Good refers to the coated surface staying intact. Poor refers to blisters being created on the coated surface.

Table 1 shows the results of the evaluations.

**Table 1**

| | Adhesion | Gasoline resistance | Water resistance |
|---|---|---|---|
| Ex. 1 | 10 | Good | Good |
| Ex. 2 | 10 | Good | Good |
| Comp. Ex. 1 | 10 | Good | Poor |

## Claims

1. An aqueous resin dispersion composition prepared by neutralizing with a basic substance an acid-modified chlorinated polyolefin that has been modified by at least one member selected from the group consisting of maleic acid, itaconic acid, citraconic acid, and acid anhydrides thereof, and dispersing the neutralized acid-modified chlorinated polyolefin in water,
wherein the acid-modified chlorinated polyolefin is prepared by graft-copolymerizing at least one member selected from the group consisting of maleic acid, itaconic acid, citraconic acid, and acid anhydrides thereof with at least one member selected from the group consisting of polypropylene and propylene-α-olefin copolymers in a proportion of 0.1 to 10 wt.% based on the at least one member selected from the group consisting of polypropylene and propylene-α-olefin copolymers to obtain an acid-modified polyolefin, and chlorinating the acid-modified polyolefin, and
wherein the aqueous resin dispersion does not contain any emulsifiers.

2. The composition according to Claim 1, wherein the acid-modified chlorinated polyolefin has a chlorine content of 15 to 35 wt.%.

3. The composition according to Claim 1, wherein the acid-modified chlorinated polyolefin has a weight-average molecular weight, measured by GPC, of 10000 to 150000.

4. The composition according to Claim 1, wherein the basic substance is at least one member selected from the group consisting of morpholine, ammonia and amines.

5. A process for producing an aqueous resin dispersion composition without the use of emulsifiers comprising the steps of:
dissolving an acid-modified chlorinated polyolefin in an ethereal solvent;
adding a basic substance to the acid-modified chlorinated polyolefin to neutralize;
adding water to the neutralized acid-modified chlorinated polyolefin solution to form a W/O dispersion, and further adding water to initiate phase conversion to give an O/W dispersion; and
removing the ethereal solvent,
wherein the acid-modified chlorinated polyolefin is prepared by graft-copolymerizing at least one member selected from the group consisting of α,β-unsaturated carboxylic acids and acid anhydrides thereof with at least one member selected from the group consisting of polypropylene and propylene-α-olefin copolymers in a proportion of 0.1 to 10 wt.% based on the at least one member selected from the group consisting of polypropylene and propylene-α-olefin copolymers to obtain an acid-modified polyolefin, and chlorinating the acid-modified polyolefin.

6. The process according to Claim 5, wherein the acid-modified chlorinated polyolefin has a chlorine content of 15 to 35 wt.%.

7. The process according to Claim 5, wherein the acid-modified chlorinated polyolefin has a weight-average molecular weight, measured by GPC, 10000 to 150000.

8. The process according to Claim 5, wherein the ethereal solvent is at least one member selected from the group consisting of tetrahydrofuran, propylene glycol monomethyl ether, propylene glycol monoethyl ether and propylene glycol monopropyl ether.

9. The process according to Claim 5, wherein the basic substance is at least one member selected from the group consisting of morpholine, ammonia and amines.

## Patentansprüche

1. Wässrige Harzdispersionszusammensetzung, hergestellt durch das Neutralisieren eines säuremodifizierten, chlorierten Polyolefins, das durch mindestens ein Mitglied, ausgewählt aus der Gruppe, bestehend aus Maleinsäure, Itaconsäure, Citraconsäure und Säureanhydriden davon, modifiziert wurde, mit einer basischen Substanz und das Dispergieren des neutralisierten säuremodifizierten, chlorierten Polyolefins in Wasser,
wobei das säuremodifizierte, chlorierte Polyolefin hergestellt ist durch das Pfropfcopolymerisieren mindestens eines Mitglieds, ausgewählt aus der Gruppe, bestehend aus Maleinsäure, Itaconsäure, Citraconsäure und Säureanhydriden davon, mit mindestens einem Mitglied, ausgewählt aus der Gruppe, bestehend aus Polypropylen und Propylen-α-olefin-copolymeren, in einem Verhältnis von 0,1 bis 10 Gew.-%, basierend auf dem mindestens einen Mitglied, ausgewählt aus der Gruppe, bestehend aus Polypropylen und Propylen-α-olefin-copolymeren, um ein säuremodifiziertes Polyolefin zu erhalten, und das Chlorieren des säuremodifizierten Polyolefins, und
wobei die wässrige Harzdispersion keine Emulgierungsmittel enthält.

2. Zusammensetzung nach Anspruch 1, wobei das säuremodifizierte, chlorierte Polyolefin einen Chlorgehalt von 15 bis 35 Gew.-% aufweist.

3. Zusammensetzung nach Anspruch 1, wobei das säuremodifizierte, chlorierte Polyolefin ein gewichtsmittleres Molekulargewicht, gemessen durch GPC, von 10000 bis 150000 aufweist.

4. Zusammensetzung nach Anspruch 1, wobei die basische Substanz mindestens ein Mitglied ist, ausgewählt aus der Gruppe, bestehend aus Morpholin, Ammoniak und Aminen.

5. Verfahren zur Herstellung einer wässrigen Harzdispersionszusammensetzung ohne die Verwendung von Emulgierungsmitteln, umfassend die Schritte des:
Auflösens eines säuremodifizierten, chlorierten Polyolefins in einem etherischen Lösungsmittel;
Hinzufügens einer basischen Substanz zu dem säuremodifizierten, chlorierten Polyolefin, um zu neutralisieren;
Hinzufügens von Wasser zu der neutralisierten säuremodifizierten, chlorierten Polyolefinlösung, um eine W/O-Dispersion zu bilden, und des weiteren Hinzufügens von Wasser, um eine Phasenumwandlung zu initiieren, um eine O/W-Dispersion zu ergeben; und
Entfernens des etherischen Lösungsmittels,
wobei das säuremodifizierte, chlorierte Polyolefin hergestellt ist durch das Pfropfcopolymerisieren mindestens eines Mitglieds, ausgewählt aus der Gruppe, bestehend aus α,β-ungesättigten Carbonsäuren und Säureanhydriden davon, mit mindestens einem Mitglied, ausgewählt aus der Gruppe, bestehend aus Polypropylen und Propylen-α-olefin-copolymeren, in einem Verhältnis von 0,1 bis 10 Gew.-%, basierend auf dem mindestens einen Mitglied, ausgewählt aus der Gruppe, bestehend aus Polypropylen und Propylen-α-olefin-copolymeren, um ein säuremodifiziertes Polyolefin zu erhalten, und das Chlorieren des säuremodifizierten Polyolefins.

6. Verfahren nach Anspruch 5, wobei das säuremodifizierte, chlorierte Polyolefin einen Chlorgehalt von 15 bis 35 Gew.-% aufweist.

7. Verfahren nach Anspruch 5, wobei das säuremodifizierte, chlorierte Polyolefin ein gewichtsmittleres Molekulargewicht, gemessen durch GPC, von 10000 bis 150000 aufweist.

8. Verfahren nach Anspruch 5, wobei das etherische Lösungsmittel mindestens ein Mitglied ist, ausgewählt aus der Gruppe, bestehend aus Tetrahydrofuran, Propylenglycolmonomethylether, Propylenglycolmonoethylether und Propylenglycolmonopropylether.

9. Verfahren nach Anspruch 5, wobei die basische Substanz mindestens ein Mitglied ist, ausgewählt aus der Gruppe, bestehend aus Morpholin, Ammoniak und Aminen.

## Revendications

1. Composition de type dispersion de résine aqueuse préparée par neutralisation avec une substance basique d'une polyoléfine chlorée modifiée par un acide qui a été modifiée par au moins un élément choisi dans le groupe constitué par l'acide maléique, l'acide itaconique, l'acide citraconique et leurs anhydrides, et dispersion de la polyoléfine chlorée modifiée par un acide neutralisée dans l'eau,
dans laquelle la polyoléfine chlorée modifiée par un acide est préparée par copolymérisation par greffage d'au moins un élément choisi dans le groupe constitué par l'acide maléique, l'acide itaconique, l'acide citraconique, et leurs anhydrides avec au moins un élément choisi dans le groupe constitué par le polypropylène et les copolymères de propylène-α-oléfine en une proportion de 0,1 à 10 % en poids sur la base dudit au moins élément choisi dans le groupe constitué par le polypropylène et les copolymères de propylène-α-oléfine pour obtenir une polyoléfine modifiée par un acide, et chloration de la polyoléfine modifiée par l'acide, et
dans laquelle la dispersion dé résine aqueuse ne contient aucun émulsifiant.

2. Composition selon la revendication 1, dans laquelle la polyoléfine chlorée modifiée par un acide a une teneur en chlore de 15 à 35 % en poids.

3. Composition selon la revendication 1, dans laquelle la polyoléfine chlorée modifiée par un acide a un poids moléculaire moyen en poids, mesuré par GPC, de 10 000 à 150 000.

4. Composition selon la revendication 1, dans laquelle la substance basique est au moins un élément choisi dans le groupe constitué par la morpholine, l'ammoniac et les amines.

5. Procédé de production d'une composition de type dispersion de résine aqueuse sans utilisation d'émulsifiants comprenant les étapes de :
dissolution d'une polyoléfine chlorée modifiée par un acide dans un solvant éthéré ;
ajout d'une substance basique à la polyoléfine chlorée modifiée par un acide à des fins de neutralisation ;
ajout d'eau à la solution de polyoléfine chlorée modifiée par un acide neutralisée pour former une dispersion eau dans l'huile (W/O), et ajout en outre d'eau pour initier une conversion de phase et obtenir une dispersion huile dans l'eau (O/W) ; et
élimination du solvant éthéré,
dans lequel la polyoléfine chlorée modifiée par un acide est préparée par copolymérisation par greffage d'au moins un élément choisi dans le groupe constitué par les acides carboxyliques α,β-insaturés et leurs anhydrides, avec au moins un élément choisi dans le groupe constitué par le polypropylène et les copolymères de propylène-α-oléfine en une proportion de 0,1 à 10 % en poids sur la base dudit au moins élément choisi dans le groupe constitué par le polypropylène et les copolymères de propylène-α-oléfine pour obtenir une polyoléfine modifiée par un acide, et chloration de la polyoléfine modifiée par l'acide.

6. Procédé selon la revendication 5, dans lequel la polyoléfine chlorée modifiée par un acide a une teneur en chlore de 15 à 35 % en poids.

7. Procédé selon la revendication 5, dans lequel la polyoléfine chlorée modifiée par un acide a un poids moléculaire moyen en poids, mesuré par GPC, de 10 000 à 150 000.

8. Procédé selon la revendication 5, dans lequel le solvant éthéré est au moins un élément choisi dans le groupe constitué par le tétrahydrofurane, l'éther monométhylique du propylène glycol, l'éther mono-éthylique du propylène glycol et l'éther monopropylique du propylène glycol.

9. Procédé selon la revendication 5, dans lequel la substance basique est au moins un élément choisi dans le groupe constitué par la morpholine, l'ammoniac et les amines.
